(19) Europäisches Patentamt
European Patent Office
Office européen des brevets

(11) EP 4 546 003 A1

(12) EUROPEAN PATENT APPLICATION
published in accordance with Art. 153(4) EPC

(43) Date of publication:
30.04.2025 Bulletin 2025/18

(51) International Patent Classification (IPC):
G01S 7/481 (2006.01)    H01L 27/146 (2006.01)

(21) Application number: 23830820.9

(22) Date of filing: 27.04.2023

(52) Cooperative Patent Classification (CPC):
G01S 7/481; H10F 39/12

(86) International application number:
PCT/JP2023/016607

(87) International publication number:
WO 2024/004367 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.06.2022 JP 2022102330

(71) Applicant: Sony Semiconductor Solutions
Corporation
Atsugi-shi, Kanagawa 243-0014 (JP)

(72) Inventor: TSUKUDA, Yasunori
Atsugi-shi, Kanagawa 243-0014 (JP)

(74) Representative: MFG Patentanwälte
Meyer-Wildhagen Meggle-Freund
Gerhard PartG mbB
Amalienstraße 62
80799 München (DE)

(54) RANGE FINDING MODULE

(57)    Leakage of irradiation light to the light receiving side is to be reduced in a ranging module that uses the time of flight (ToF) method.

A first pixel region in which a plurality of first pixels that receive reflected light of irradiation light from a light source is provided, and a second pixel region in which a second pixel is provided between the first pixel region and the light source are formed on the light receiving surface of a sensor chip. A light blocking wall is disposed between the first pixel region and the second pixel region. The sensor chip is connected to a support substrate, and openings that guide the reflected light to the first pixel region and the second pixel region are formed in the support substrate.

FIG. 1

**Description**

TECHNICAL FIELD

The present technology relates to a ranging module. More particularly, the present technology relates to a ranging module that emits irradiation light and receives reflected light.

BACKGROUND ART

For ranging modules, a ranging method called the time of flight (ToF) method has been known. The ToF method is a method for measuring a distance by irradiating an object with irradiation light from an electronic device, and obtaining the round-trip time required until the irradiation light is reflected and returned to the electronic device. For example, a module has been proposed, and, in the module, a light emitting element that emits irradiation light and a light receiving element that receives reflected light are provided on a substrate, and a light blocking wall is disposed between these elements (see Patent Document 1, for example). In this module, a gap is formed between the light blocking wall and the substrate so that the lower surface of the light blocking wall does not come into contact with the substrate.

CITATION LIST

PATENT DOCUMENT

Patent Document 1: Japanese Patent Application Laid-Open No. 2016-27657

SUMMARY OF THE INVENTION

PROBLEMS TO BE SOLVED BY THE INVENTION

By the conventional technique described above, the gap is formed so that the lower surface of the light blocking wall does not come into contact with the substrate. With this arrangement, thermal expansion of the light blocking wall does not affect the substrate, and sensing performance is enhanced. In the module described above, however, irradiation light might leak to the light receiving side through the gap under the light blocking wall.

The present technology has been made in view of such circumstances, and aims to reduce leakage of irradiation light to the light receiving side in a ranging module that uses the ToF method.

SOLUTIONS TO PROBLEMS

The present technology has been made to solve the above problems, and a first aspect thereof is a ranging module that includes: a sensor chip that has a first pixel region and a second pixel region formed on a light receiving surface, a plurality of first pixels being provided in the first pixel region, a second pixel being provided in the second pixel region, the first pixels receiving reflected light of irradiation light from a light source, the second pixel being disposed between the first pixel region and the light source; a light blocking wall that is disposed between the first pixel region and the second pixel region; and a support substrate to which the sensor chip is connected, the support substrate having an opening through which the reflected light is guided to the first pixel region and the second pixel region. This brings about an effect of reducing leakage of irradiation light to the light receiving side.

Also, in the first aspect, the opening may include a first opening and a second opening separated by a bridge portion that is part of the support substrate, the first opening may guide the reflected light to the first pixel region, and the second opening may guide the reflected light to the second pixel region. This brings about an effect of reliably reducing light leakage.

Further, in the first aspect, the light blocking wall may be disposed in the bridge portion, and the width of the light shielding wall may be smaller than the distance between the first pixel region and the second pixel region. This brings about an effect of preventing reflected light from being blocked.

Furthermore, in the first aspect, the ranging module may further include: a laser chip in which a plurality of laser diodes is provided as the light source; and a driver chip on which a laser diode driver that drives each laser diode of the plurality of laser diodes is disposed. In this ranging module, the sensor chip may be connected to the back surface on the opposite side of the support substrate from the front surface that is the surface on the light receiving side of the support substrate. This brings about an effect of causing the laser drivers to emit light when the laser drivers are driven by the laser diode driver.

Further, in the first aspect, the laser chip may be disposed between the second pixel and the driver chip. This brings about an effect of causing light reflected in the ranging module to enter the second pixel.

Furthermore, in the first aspect, the laser chip and the driver chip may be connected to the front surface of the support substrate. This brings about an effect of increasing the degree of freedom in selecting a laser diode and a laser diode driver.

Further, in the first aspect, the laser chip and the driver chip may be connected to the back surface of the support substrate, and the opening may further include a third opening that guides the irradiation light from the laser chip. This brings about an effect of reducing the area and the thickness of the ranging module.

Furthermore, in the first aspect, the laser chip may be connected to the back surface of the support substrate, the driver chip may be connected to the front surface of the support substrate, and the opening may further include a third opening that guides the irradiation light from the laser chip. This brings about an effect of reducing the area of the ranging module.

Further, in the first aspect, the laser chip may be stacked on the driver chip. This brings about an effect of reducing the area of the ranging module.

Furthermore, in the first aspect, the laser chip may be connected to the front surface of the support substrate by a wire. This brings about an effect of mounting the laser chip on the support substrate.

Further, in the first aspect, the driver chip may be connected to the back surface of the support substrate by a solder ball. This brings about an effect of reducing the thickness of the ranging module.

Furthermore, in the first aspect, the laser chip may be connected to the back surface of the support substrate, and the opening may further include a third opening that guides the irradiation light from the laser chip. This brings about an effect of reducing the thickness of the ranging module.

Also, in the first aspect, the ranging module may further include a ranging processing unit. In this ranging module, the second pixel may include a reference pixel, and the ranging processing unit may obtain a distance in accordance with the time from a timing of light reception by the reference pixel till a timing of light reception by the first pixels. This brings about an effect of acquiring the light emission timing even if there is a time lag from a light emission command till light emission.

Furthermore, in the first aspect, the ranging module may further include a control circuit. In this ranging module, the first pixels may include a first photodiode, the second pixel may include a monitor pixel, the monitor pixel may include a second photodiode and a sample-and-hold circuit, and the control circuit may supply a lower potential to the anodes of the first photodiode and the second photodiode when the holding potential of the sample-and-hold circuit is higher at a time of decrease in the potential of the cathode of the second photodiode due to light reception by the monitor pixel. This brings about an effect of reducing fluctuations of an excess bias.

BRIEF DESCRIPTION OF DRAWINGS

Fig. 1 is an example of cross-sectional views of a ranging module according to a first embodiment of the present technology.

Fig. 2 is an example of perspective views of the ranging module according to the first embodiment of the present technology.

Fig. 3 is an example of cross-sectional views of the ranging module according to the first embodiment of the present technology, as viewed from another direction.

Fig. 4 is a block diagram illustrating an example configuration of the ranging module according to the first embodiment of the present technology.

Fig. 5 is a block diagram illustrating an example configuration of a solid-state imaging element according to the first embodiment of the present technology.

Fig. 6 is a block diagram illustrating an example configuration of a signal processing unit according to the first embodiment of the present technology.

Fig. 7 is an example of a perspective view and cross-sectional views of a ranging module according to a comparative example.

Fig. 8 is a block diagram illustrating an example configuration of monitor pixels, measurement pixels, and a control unit according to a modification of the first embodiment of the present technology.

Fig. 9 is a circuit diagram illustrating an example configuration of a control unit according to the first embodiment of the present technology.

Fig. 10 is a diagram illustrating an example of fluctuations of a cathode potential and an anode potential according to the first embodiment of the present technology.

Fig. 11 is an example of a cross-sectional view of a ranging module according to a second embodiment of the present technology.

Fig. 12 is an example of a perspective view of the ranging module according to the second embodiment of the present technology.

Fig. 13 is an example of a cross-sectional view of a ranging module according to a third embodiment of the present technology.

Fig. 14 is an example of a cross-sectional view of a ranging module according to a fourth embodiment of the present technology.

Fig. 15 is an example of a perspective view of a stacked chip according to the fourth embodiment of the present technology.

Fig. 16 is an example of a cross-sectional view of a ranging module according to a fifth embodiment of the present technology.

Fig. 17 is an example of a cross-sectional view of a ranging module according to a sixth embodiment of the present technology.

Fig. 18 is a block diagram depicting an example of schematic configuration of a vehicle control system.

Fig. 19 is an explanatory diagram depicting an example of an installation position of an imaging section.

MODE FOR CARRYING OUT THE INVENTION

Modes for carrying out the present technology (hereinafter referred to as embodiments) will be described below. The description will be given in the following order.

1. First embodiment (an example in which a sensor chip is connected to the back surface of a support substrate)

2. Second embodiment (an example in which all chips are connected to the back surface of a support substrate)

3. Third embodiment (an example in which a sensor chip and a laser chip are connected to the back surface of a support substrate)

4. Fourth embodiment (an example in which a sensor chip is connected to the back surface of a support substrate, and a stacked chip is wire-bonded to the front surface thereof)

5. Fifth embodiment (an example in which a sensor chip is connected to the back surface of a support substrate, and a stacked chip is connected to the front surface thereof by solder balls)

6. Sixth embodiment (an example in which a sensor chip and a stacked chip are connected to the back surface of a support substrate)

7. Example Application to a Mobile Body

<1. First Embodiment>

[Example Configuration of a Ranging Module]

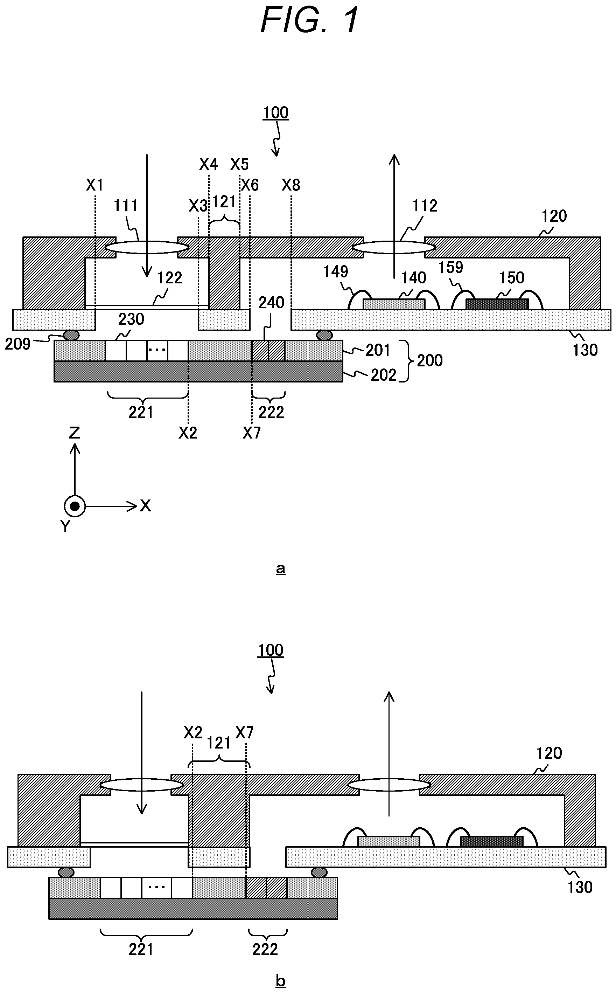

Fig. 1 is an example of cross-sectional views of a ranging module 100 according to a first embodiment of the present technology. In the drawing, "a" illustrates a cross-sectional view of the ranging module 100 having an appropriate size, and "b" illustrates a cross-sectional view of the ranging module 100 partially having an inappropriate size.

The ranging module 100 measures a distance to an object, and includes lenses 111 and 112, a sealing member 120, an optical filter 122, a support substrate 130, a laser chip 140, a driver chip 150, and a sensor chip 200.

Further, the optical axes of the lenses 111 and 112 are defined as the Z-axis, and a predetermined axis perpendicular to the Z-axis is defined as the X-axis. An axis perpendicular to the X-axis and the Z-axis is defined as the Y-axis. This drawing illustrates a cross-sectional view of the ranging module 100 as viewed from the Y-axis direction.

The sensor chip 200 is a chip in which pixels that photoelectrically convert incident light are arranged, and includes a pixel chip 201 and a circuit chip 202 that are stacked. These chips are electrically connected via a connecting portion such as a via. Note that the connection can also be made by Cu-Cu bonding or a bump, other than a via. The connection can also be made by a scheme (such as magnetic coupling) other than these schemes. Furthermore, although the two chips are stacked, three or more layers can be stacked. Alternatively, although the sensor chip 200 has a stacked structure,
it is also possible to form a single semiconductor chip without stacking.

In the pixel chip 201, a plurality of pixels is arranged. These pixels include a plurality of measurement pixels 230 and a predetermined number of reference pixels 240. Hereinafter, the direction from the circuit chip 202 toward the pixel chip 201 will be referred to as the "upward" direction, and the opposite direction will be referred to as the "downward" direction.

The plurality of measurement pixels 230 is arranged in a two-dimensional lattice pattern in a measurement pixel region 221 on the upper surface of the pixel chip 201. Meanwhile, the reference pixels 240 are arranged in a reference pixel region 222 on the upper surface of the pixel chip 201. In the drawing, the measurement pixels 230 are two-dimensionally arranged in the X-axis direction and the Y-axis direction, and the reference pixels 240 are also two-dimensionally arranged in the X-axis direction and the Y-axis direction. Note that the measurement pixels 230 are an example of the first pixels disclosed in the claims, and the reference pixels 240 are an example of the second pixel disclosed in the claims. Also, the reference pixels 240 may be one-dimensionally arranged in the Y-axis direction or the like.

Further, in the X-axis direction, a certain distance is maintained between the measurement pixel region 221 and the reference pixel region 222. In the drawing, the distance from a coordinate X2 to a coordinate X7 corresponds to the distance between the measurement pixel region 221 and the reference pixel region 222.

Furthermore, the peripheries of the pixels (the measurement pixels 230 and the reference pixels 240) on the upper surface of the pixel chip 201 are electrically connected to (in other words, are flip-chip mounted on) the lower surface of the support substrate 130 by bumps 209.

Two openings penetrating in the Z-axis direction are formed in the support substrate 130. The opening from a coordinate X1 to a coordinate X3 guides reflected light of irradiation light to the measurement pixel region 221, and the opening from a coordinate X6 to a coordinate X8 guides reflected light to the reference pixel region 222. The part of the support substrate 130 from the coordinate X3 to the coordinate X6 that separates these openings from each other will be hereinafter referred to as the "bridge portion". Note that the former opening is an example of the first opening disclosed in the claims, and the latter opening an example of the second opening disclosed in the claims.

Further, the surface on the light receiving side of the support substrate 130 is referred to as the upper surface or the "front surface", and the surface on the opposite side from the upper surface will be referred to as the lower surface or the "back surface". The laser chip 140 and the driver chip 150 are electrically connected to the front surface of the support substrate 130 by wires 149 and 159.

A plurality of laser diodes (not illustrated) is arranged as a light source on the laser chip 140. Further, a laser diode driver (not illustrated) is disposed on the driver chip 150. The laser driver diode drives each laser diode of the plurality of laser diodes to emit irradiation light. As the irradiation light, invisible light such as infrared light is used, for example.

Furthermore, in the X-axis direction, the reference pixel region 222 is disposed between the laser chip 140 and the measurement pixel region 221. The position of the driver chip 150 is not limited, but is disposed near the laser chip 140.

In the drawing, the laser chip 140 and the driver chip 150 are not stacked. Therefore, the degree of freedom in selecting a laser diode or a laser diode driver is higher than that in a case where those chips are stacked, as described later. Further, the sensor chip 200 is connected to the back surface of the support substrate 130, and the laser chip 140 is connected to the front surface thereof. Accordingly, wiring interference between the chips can be eliminated, compared with a case where both of those chips are connected to the back surface. This makes it easier to shorten the base length from the light source (laser chip 140) to the light receiving unit (measurement pixel region 221).

The sealing member 120 covers and seals the peripheries of the two openings of the support substrate 130, and the laser chip 140 and the driver chip 150 with outer walls. In this sealing member 120, openings for attaching the lenses 111 and 112 are formed. The lens 111 is attached to a portion above the measurement pixel region 221, and the lens 112 is attached to a portion above the laser chip 140.

The lens 111 condenses reflected light of irradiation light, and guides the reflected light to the measurement pixel region 221 below the lens 111. The lens 112 optically adjusts the irradiation light from the laser chip 140 below the lens 112, and a collimating lens or the like is used.

Further, part of the outer walls of the sealing member 120 extends downward, and the lower end thereof is in contact with the bridge portion of the support substrate 130. This portion serves as a light blocking wall 121 that blocks irradiation light. This light blocking wall 121 extends in the Y-axis direction, and the space inside the sealing member 120 is separated into two spaces on the light receiving side and the irradiation side by the light blocking wall 121. In the drawing, the portion from a coordinate X4 to a coordinate X5 corresponds to the light blocking wall 121.

The optical filter 122 passes light (infrared light or the like) in the same wavelength region as the irradiation light, and is disposed between the lens 111 and the measurement pixel region 221.

Furthermore, as illustrated as an example in "a" of the drawing, the respective widths of the bridge portion and the light blocking wall 121 are assumed to be narrower than the distance between the measurement pixel region 221 and the reference pixel region 222 (which is the distance from the coordinate X2 to the coordinate X7). In "a" of the drawing, the distance from the coordinate X3 to the coordinate X6 is the width of the bridge portion, and the distance from the coordinate X4 to the coordinate X5 is the width of the light blocking wall 121.

On the other hand, "b" of the drawing illustrates an inappropriate example in which the respective widths of the bridge portion and the light blocking wall 121 are made equal to or greater than the distance between the measurement pixel region 221 and the reference pixel region 222 (which is the distance from the coordinate X2 to the coordinate X7). In this example, there is a possibility that part of reflected light is blocked by the bridge portion and the light blocking wall 121. As illustrated as an example in "a" of the drawing, the widths of the bridge portion and the light blocking wall 121 are reduced, to prevent blocking of part of reflected light.

In summary, the measurement pixel region 221 and the reference pixel region 222 are formed on the light receiving surface of the sensor chip 200. In the measurement pixel region 221, a plurality of measurement pixels 230 that receive reflected light of irradiation light from the light source (laser chip 140) is arranged. The reference pixel region 222 is disposed between the measurement pixel region 221 and the light source, and a predetermined number of reference pixels 240 are arranged therein. The light blocking wall 121 is disposed between the measurement pixel region 221 and the reference pixel region 222.

Further, two openings separated by the bridge portion from the coordinate X3 to the coordinate X6 are formed in the support substrate 130. One of those openings guides reflected light to the measurement pixel region 221, and the other guides reflected light to the reference pixel region 222. The former reflected light is the light reflected by an object outside the ranging module 100, and the latter reflected light is the light reflected inside the ranging module 100.

Note that an optical member (such as a mirror) that reflects irradiation light and guides the reflected light to the reference pixel region 222 may be further disposed inside the sealing member 120.

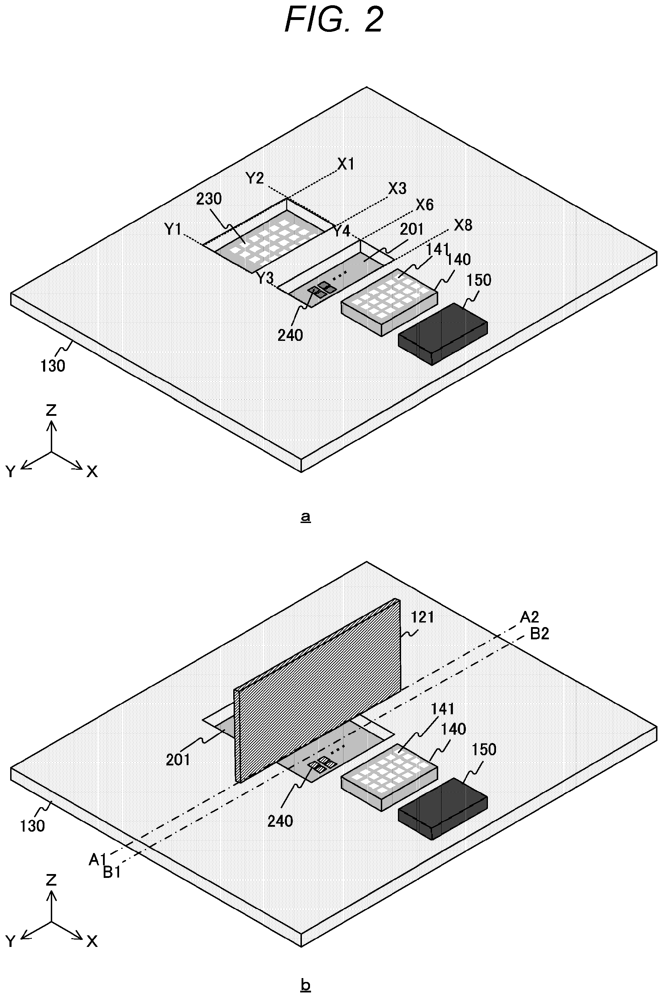

Fig. 2 is an example of perspective views of the ranging module 100 according to the first embodiment of the present technology. In the drawing, "a" illustrates a perspective view of the ranging module 100, with the lens 111, the lens 112, the sealing member 120, and the optical filter 122 having been removed. In the drawing, "b" illustrates a perspective view of a state in which the light blocking wall 121 has been added to "a" of the drawing.

As illustrated as an example in "a" of the drawing, the opening formed in the region surrounded by coordinates (X1, Y1), (X1, Y2), (X3, Y1), and (X3, Y2) in the X-Y plane guides reflected light to the measurement pixels 230. Further, the opening formed in the region surrounded by coordinates (X6, Y3), (X6, Y4), (X8, Y3), and (X8, Y4) guides reflected light to the reference pixels 240. These openings are separated by the bridge portion in the region surrounded by coordinates (X3, Y1), (X3, Y2), (X6, Y3), and (X6, Y4). Note that the distance from Y1 to Y2, and the distance from Y3 to Y4 may be the same, or may be different.

As illustrated as an example in "b" of the drawing, the light blocking wall 121 is disposed in the bridge portion, and the lower end thereof is in contact with the bridge portion. Alternatively, a slight gap is left between the lower end of the light blocking wall 121 and the bridge portion within such a range in which influence of leakage of irradiation light on the light receiving side is avoided. Since there is almost no gap between the bridge portion and the light blocking wall 121, it is possible to prevent irradiation light from leaking to the light receiving side.

Note that, although the two openings are separated by the bridge portion, the bridge portion may not be provided, and only one opening may be provided. In this case, a gap is formed between the lower end of the light blocking wall 121 and the upper surface of the sensor chip 200. However, the gap is located at a lower position than the light source, and thus, light leakage hardly occurs. Furthermore, since only one opening is required to be formed, processing becomes easier.

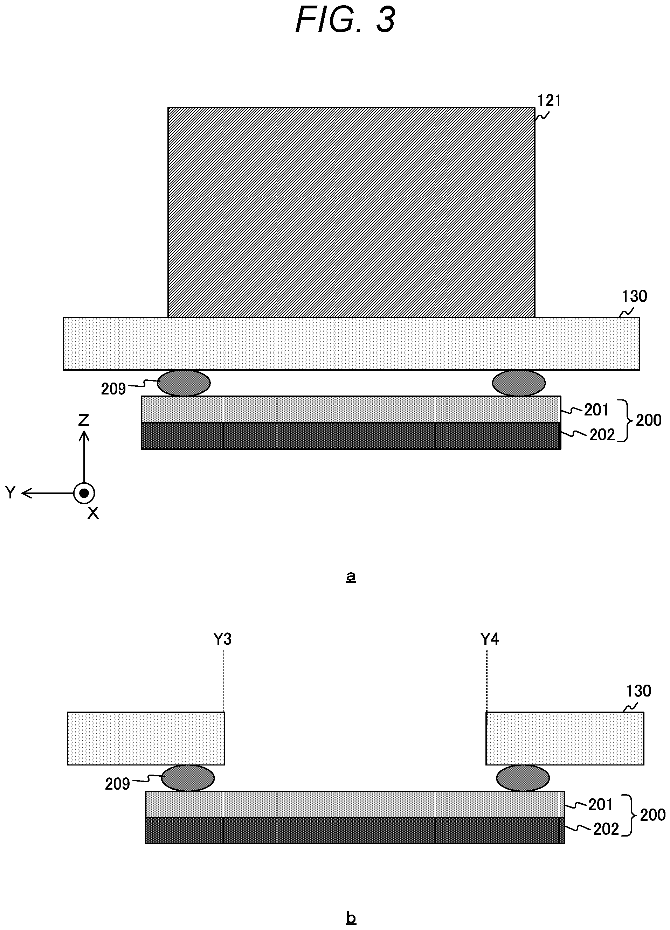

Fig. 3 is an example of cross-sectional views of the ranging module 100 according to the first embodiment of the present technology, as viewed from the X-axis direction. In Fig. 3, "a" illustrates a cross-sectional view taken along the line A1-A2 immediately below the light blocking wall 121 in "b" of Fig. 2. In Fig. 3, "b" illustrates a cross-sectional view taken along the line B1-B2 extending through the opening in "b" of Fig. 2.

As illustrated as an example in "a" of Fig. 3, the lower end of the light blocking wall 121 is in contact with the bridge portion of the support substrate 130. Further, as illustrated as an example in "b" of Fig. 3, the portion from the coordinate Y3 to the coordinate Y4 is open.

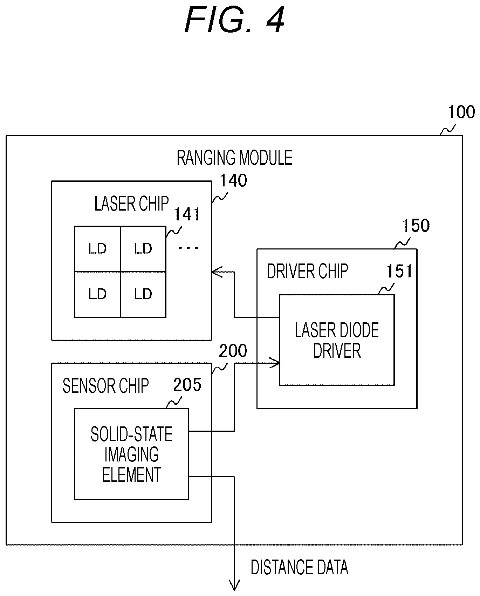

Fig. 4 is a block diagram illustrating an example configuration of the ranging module 100 according to the first embodiment of the present technology. The ranging module 100 includes the laser chip 140, the driver chip 150, and the sensor chip 200.

A plurality of laser diodes 141 is arranged in the laser chip 140. For example, vertical cavity surface emitting lasers (VCSELs) are used as the laser diodes 141. A laser diode driver 151 is disposed in the driver chip 150. A solid-state imaging element 205 is disposed in the sensor chip 200.

The laser diodes 141 emit light in response to driving by the laser diode driver 151. The laser diode driver 151 drives the laser diodes 141 in accordance with a light emission command supplied from the solid-state imaging element 205.

Further, the solid-state imaging element 205 measures the distance to an object for each measurement pixel 230 by a direct ToF (dToF) method, and outputs distance data.

[Example Configuration of the Solid-State Imaging Element]

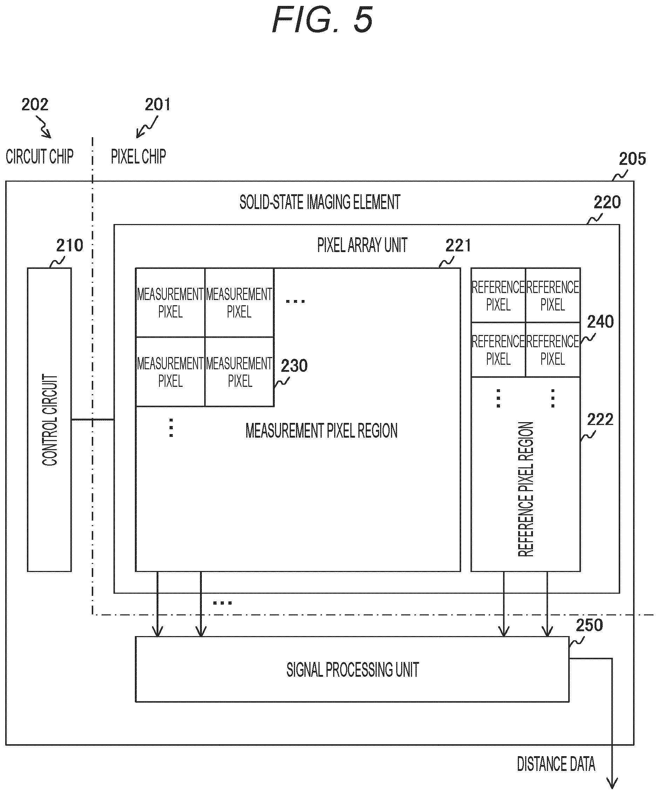

Fig. 5 is a block diagram illustrating an example configuration of the solid-state imaging element 205 according to the first embodiment of the present technology. The solid-state imaging element 205 includes a control circuit 210, a pixel array unit 220, and a signal processing unit 250. In the pixel array unit 220, the measurement pixel region 221 and the reference pixel region 222 are disposed. The plurality of measurement pixels 230 is arranged in the measurement pixel region 221, and the predetermined number of reference pixels 240 are arranged in the reference pixel region 222. These pixels are arranged in the pixel chip 201. Note that some of the elements in the respective pixels may be disposed in the pixel chip 201, and the remaining elements may be disposed in the circuit chip 202.

Each measurement pixel 230 includes a photodiode such as a single-photon avalanche diode (SPAD), a resistor, and a transistor, and generates a pulse signal when reflected light enters. The circuit configuration of each reference pixel 240 is similar to that of each measurement pixel 230. However, as described above, the reference pixels 240 are disposed on the irradiation side of the two sides of the light blocking wall 121. Therefore, the length of the optical path in which irradiation light from the laser diodes 141 is reflected in the ranging module 100 and enters the reference pixels 240 is extremely short.

The control circuit 210 controls the potential of each pixel. The signal processing unit 250 measures a distance for each measurement pixel 230, on the basis of signals from the respective measurement pixels 230 and the respective reference pixels 240.

[Example Configuration of the Signal Processing Unit]

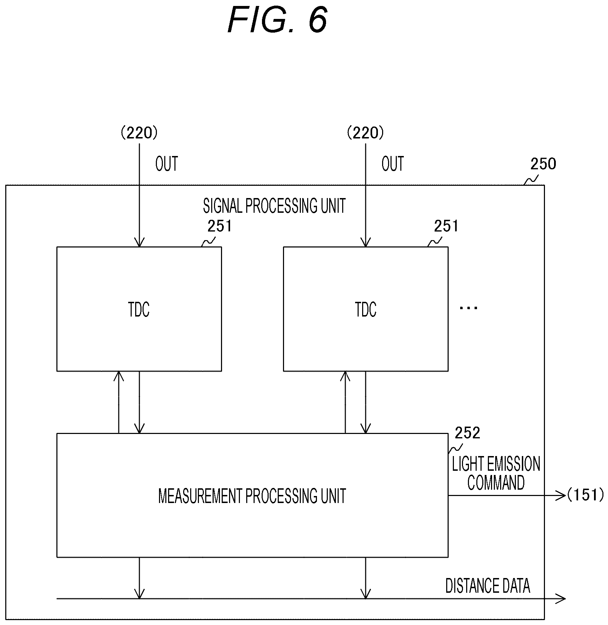

Fig. 6 is a block diagram illustrating an example configuration of the signal processing unit 250 according to the first embodiment of the present technology. The signal processing unit 250 includes time-to-digital converters (TDCs) 251 for the respective columns, and a measurement processing unit 252. A pulse signal OUT that is output from the pixels (measurement pixels 230 or reference pixels 240) in a column is supplied to the TDC 251 of the column. Note that one set of a TDC 251 and a measurement processing unit 252 for M (M being an integer of 1 or greater) pixels may be disposed immediately below the pixel array unit 220.

Each TDC 251 measures the time from the output timing of a light emission command to the laser diode driver 151 till the rising timing of the pulse signal OUT (in other words, the light reception timing).

The measurement processing unit 252 measures a distance for each measurement pixel 230. The measurement processing unit 252 outputs the light emission command to the laser diode driver 151, and controls the TDC 251 of each column to start clocking. The TDC 251 of each column then stops clocking when the pulse signal of the corresponding column rises, and passes time information indicating the clocked time t on to the measurement processing unit 252. The measurement processing unit 252 generates a histogram on the basis of these times t.

Here, by the dToF method, distance measurement is performed on the basis of a difference between a timing t0 of light emission by the light source (laser diodes 141) and a timing t1 of light reception by the measurement pixel 230, using the following expression.

$$D = (c/2) \times (t1 - t0) \ ... (\text{Expression 1})$$

In the above expression, D represents the distance, and the unit is meter (m), for example. Further, c represents the speed of light, and the unit is meter per second (m/s), for example.

As described above, the laser diode driver 151 drives the laser diodes 141 in accordance with a light emission command from the measurement processing unit 252, and causes the laser diodes 141 to emit light. At this point of time, there is some time lag between the light emission command and the actual light emission from the laser diodes 141. This time lag is caused by a time constant in the path from the measurement processing unit 252 to the laser diodes 141, variations in characteristics due to temperature or aging of the laser diodes 141, or the like, and is difficult to predict.

Therefore, as described above, the reference pixels 240 are disposed at positions where the optical path length from the laser diodes 141 to the reference pixels 240 is extremely short. With this arrangement, the difference between the timing of light reception and the timing of light emission by the reference pixels 240 can be regarded as zero. Thus, the timing of light reception by the reference pixels 240 can be regarded as the light emission timing.

The measurement processing unit 252 creates a histogram by performing acquisition of time information a plurality of times (thousands to tens of thousands of times, for example) for each pixel, and acquires a peak value of the created histogram as the timing of light reception by the pixel. The measurement processing unit 252 then assigns the timing of light reception by the reference pixel 240 to t0 in Expression 1, and the timing of light reception by the measurement pixel 230 to t1 in Expression 1, and thus, obtains a distance D for each measurement pixel 230. Note that details of a ranging method using the reference pixels 240 are disclosed in Japanese Patent Application Laid-Open No. 2020-139810.

Here, a configuration in which any opening is not formed in the support substrate 130, and the sensor chip 200 is connected to the support substrate 130 is discussed as a comparative example.

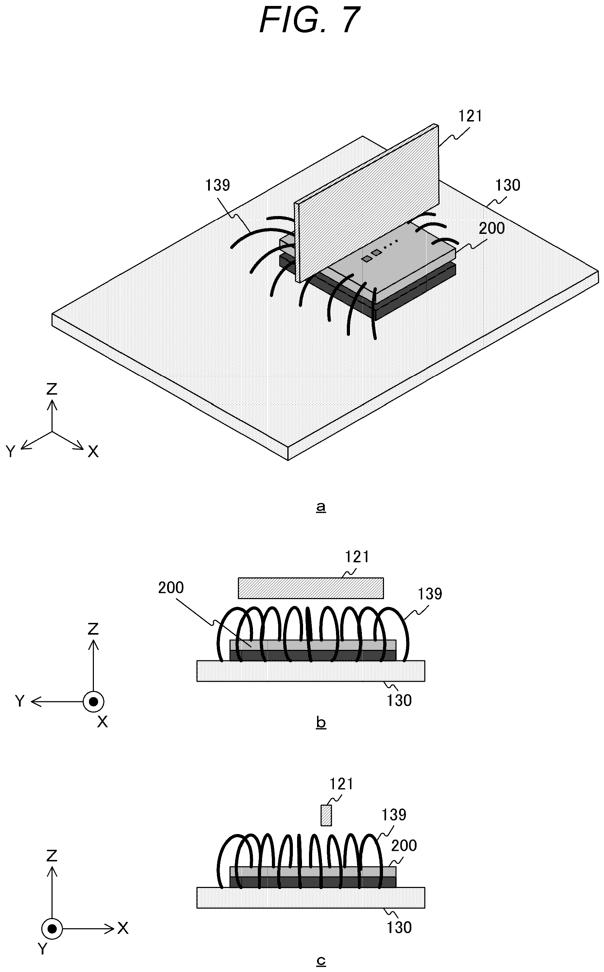

Fig. 7 is an example of a perspective view and cross-sectional views of a ranging module according to the comparative example. In the drawing, the laser chip 140 and the driver chip 150 are not shown. In the drawing, "a" illustrates a perspective view of the comparative example, and "b" illustrates a cross-sectional view of the comparative example as viewed from the X-axis direction. In the drawing, "c" illustrates a cross-sectional view of the comparative example as viewed from the Y-axis direction.

As illustrated as an example in "a" of the drawing, the sensor chip 200 is electrically connected to the support substrate 130 by wires 139 in the comparative example. Therefore, as illustrated as an example in "b" and "c" of the drawing, a gap of a certain size is formed between the lower end of the light blocking wall 121 and the light receiving surface of the sensor chip 200 so that the lower end of the light blocking wall 121 does not come into contact with the wires 139. In the configuration of the comparative example, irradiation light might leak to the light receiving side through the gap. This makes it difficult to distinguish between reflected light outside the ranging module 100 and scattered light inside the ranging module 100. As a result, the short-distance measuring range is particularly limited. Further, peak separation between the internal scattered light and the reflected light requires calculation costs. To avoid this, the measurement pixels 230 and the reference pixels 240 should be separated from each other. In that case, however, a situation in which different rays of reflected light are received by one pixel due to parallax easily occurs, and it becomes difficult to detect light that is reflected over a long distance and is simultaneously obtained with light reflected over a short distance. In this case, missed detection of an object at a long distance, or, in other words, occlusion occurs.

On the other hand, in the configuration in Fig. 1 in which the openings are formed in the support substrate 130, and the sensor chip 200 is flip-chip mounted on the back surface thereof, there is no need to avoid the wires on the front surface side, and thus, the lower end of the light blocking wall 121 can be brought into contact with the bridge portion of the support substrate 130. This can reduce leakage of irradiation light. As light leakage is reduced in this manner, the distance measurement range on the short distance side can be made wider than that in the comparative example. Also, the peak separation between the internal scattered light and the reflected light becomes unnecessary, and the calculation costs can be lowered. Further, the distance between the measurement pixels 230 and the reference pixels 240 can be made closer to the width of the light blocking wall 121, and thus, occlusion can be prevented.

As described above, according to the first embodiment of the present technology, openings are formed in the support substrate 130, the sensor chip 200 is flip-chip mounted on the back surface thereof, and the light blocking wall 121 is provided. Thus, the gap at the lower end of the light blocking wall 121 can be omitted, and light leakage can be reduced.

[Modification]

In the first embodiment described above, the solid-state imaging element 205 measures distance, on the assumption that the light reception timing of the reference pixels 240 is the light emission timing. However, pixels different from the reference pixels 240 may be disposed on the irradiation side. A ranging module 100 according to a modification of the first embodiment differs from that of the first embodiment in that monitor pixels are provided in place of the reference pixels 240.

In the modification of the first embodiment, monitor pixels 401 are arranged in place of the reference pixels 240, and a control unit 500 is further provided.

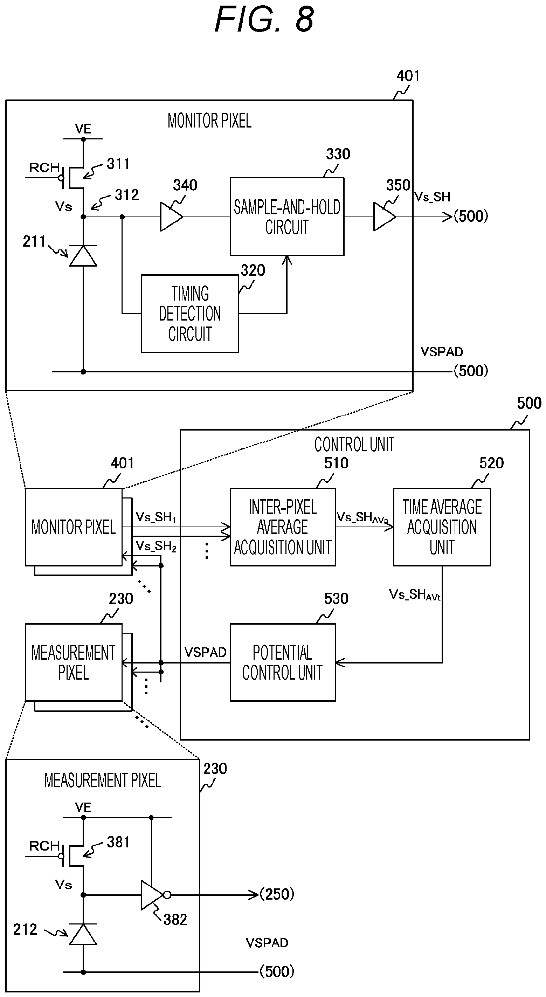

Fig. 8 is a block diagram illustrating an example configuration of the monitor pixels 401, the measurement pixels 230, and the control unit 500 according to the modification of the first embodiment of the present technology. In the control unit 500, an inter-pixel average acquisition unit 510, a time average acquisition unit 520, and a potential control unit 530 are provided.

Each monitor pixel 401 includes a photoelectric conversion element 211, a p-channel metal oxide semiconductor (pMOS) transistor 311, a timing detection circuit 320, a sample-and-hold circuit 330, and buffers 340 and 350.

The pMOS transistor 311 is inserted between a power supply potential VE and the photoelectric conversion element 211. Further, a control signal RCH from a timing generation unit 220 is input to the gate of the pMOS transistor 311. When the control signal RCH at the low level is input, the pMOS transistor 311 supplies the power supply potential VE to a connection node 312 between the pMOS transistor 311 and the photoelectric conversion element 211.

The photoelectric conversion element 211 outputs a photocurrent by photoelectric conversion, depending on photon incidence. For example, a SPAD is used as the photoelectric conversion element 211. The cathode of the photoelectric conversion element 211 is connected to the connection node 312, and its cathode potential Vs corresponds to the potential of the monitoring target. On the other hand, the anode of the photoelectric conversion element 211 is connected to the control unit 500, and its anode potential VSPAD is controlled by the control unit 500.

A buffer 340 is inserted between the connection node 312 and the sample-and-hold circuit 330.

The timing detection circuit 320 monitors the cathode potential Vs, and detects the timing at which a predetermined period of time has elapsed since the potential Vs started dropping with respect to the potential (which is the power supply potential VE) supplied by the pMOS transistor 311. In a case where the cathode potential Vs is the monitoring target, the cathode potential Vs becomes lower than the power supply potential VE when a photocurrent flows depending on photon incidence. Note that the monitor pixel 401 can also monitor the anode potential, as described later. When the anode potential is monitored, the timing at which a predetermined period of time has elapsed since the anode potential started increasing is detected.

The sample-and-hold circuit 330 takes in and holds the cathode potential Vs on the basis of the timing detected by the timing detection circuit 320. The sample-and-hold circuit 330 outputs the held potential as a holding potential Vs_SH to a buffer 350.

The buffer 350 is inserted between the sample-and-hold circuit 330 and the control unit 500. Note that the buffer 250 is not necessarily provided, and it is possible to design a configuration in which the buffer 250 is not provided.

Alternatively, two or more buffers 340, and two or more buffers 350 may be provided.

Further, a photoelectric conversion element 212, a pMOS transistor 381, and an inverter 382 are provided in each measurement pixel 230.

The connection configuration between the pMOS transistor 381 and the photoelectric conversion element 212 is similar to that between the pMOS transistor 311 and the photoelectric conversion element 211 in each monitor pixel 401.

The inverter 382 inverts a signal of the cathode potential of the photoelectric conversion element 212, and supplies the inverted signal as a pulse signal of the measurement pixel 230 to a multiplexer 231 (or a multiplexer 232).

Further, each monitor pixel 401 of the plurality of monitor pixels 401 supplies the holding potential Vs_SH to the inter-pixel average acquisition unit 510. A holding potential of the m-th (m being an integer) monitor pixel 401 is defined as Vs_SHm. Note that the monitor pixels 401 are an example of the second pixel of the claims.

The inter-pixel average acquisition unit 510 obtains an average of the respective holding potentials Vs_SHm of the plurality of monitor pixels 401 as an inter-pixel average Vs_SHAVp. The inter-pixel average acquisition unit 510 supplies the inter-pixel average Vs_SHAVp to the time average acquisition unit 520.

The time average acquisition unit 520 obtains a time average Vs_SHAVt of the inter-pixel average Vs_SHAVp. The time average acquisition unit 520 supplies the time average Vs_SHAVt to the potential control unit 530.

The potential control unit 530 controls the anode potential VSPAD to a lower potential when the time average Vs_SHAVt of held cathode potentials is higher. All the anodes of the plurality of monitor pixels 401 and the plurality of measurement pixels 230 are commonly connected to the potential control unit 530, and the potential control unit 530 controls the potentials of these anodes. Note that, when the monitor pixels 401 monitor the anode potentials, the cathode potentials are controlled by the potential control unit 530.

Further, in each monitor pixel 401, one (the cathode, for example) of the anode and the cathode of the photoelectric conversion element 211 is connected to the connection node 312. The pMOS transistor 311 supplies the power supply potential VE to the connection node 312, in accordance with the control signal RCH.

The timing detection circuit 320 detects the timing at which a predetermined period of time has elapsed since the cathode potential Vs of the connection node 312 started dropping with respect to the power supply potential VE. This timing corresponds to the timing at which a predetermined delay time has elapsed since the cathode potential dropped to a lower value than the threshold of the inverter 321.

The sample-and-hold circuit 330 takes in and holds the cathode potential Vs as the holding potential Vs_SH, on the basis of the timing detected by the timing detection circuit 320.

The control unit 500 then controls the other one (the anode, for example) of the anode and the cathode of the photoelectric conversion element 211 to a lower potential when the holding potential Vs_SH is higher.

Furthermore, in the monitor pixel 401, the buffer 340 is inserted into the stage preceding the sample-and-hold circuit 330, so that the capacitances of the connection nodes of the respective monitor pixels 401 and the respective measurement pixels 230 can be equalized. This connection node is the connection node between the photoelectric conversion element and the pMOS transistor. Thus, the breakdown voltages VBD of the respective monitor pixels 401 and the respective measurement pixels 230 can be equalized.

[Example Configuration of the Control Unit]

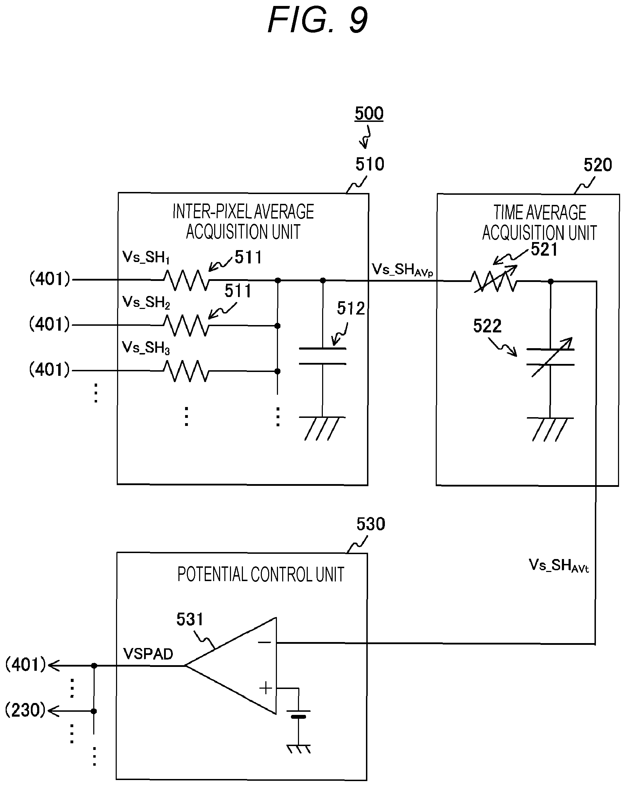

Fig. 9 is a circuit diagram illustrating an example configuration of the control unit 500 according to the first embodiment of the present technology. In the inter-pixel average acquisition unit 510, a plurality of resistors 511 and a capacitor 512 are provided. The resistors 511 are provided for the respective monitor pixels 401. In the time average acquisition unit 520, a variable resistor 521 and a variable capacitor 522 are provided. In the potential control unit 530, an amplifier 531 is provided.

In the inter-pixel average acquisition unit 510, one end of each resistor 511 is connected to each corresponding monitor pixel 401, and the other end thereof is connected to one end of the capacitor 512 and the time average acquisition unit 520. That is, the plurality of resistors 511 is connected in parallel between the plurality of monitor pixels 401 and the capacitor 512. The other end of the capacitor 512 is connected to the ground potential. By these resistors 511, the average potential of the holding potentials $Vs\_SH_m$ of the plurality of monitor pixels 401 is generated as the inter-pixel average $Vs\_SH_{AVp}$, and is held in the capacitor 512. Obtaining the inter-pixel average can inhibit an adverse effect due to variation in the holding potential Vs_SH among the pixels.

Further, in the time average acquisition unit 520, one end of the variable resistor 521 is connected to the inter-pixel average acquisition unit 510, and the other end is connected to one end of the variable capacitor 522 and the potential control unit 530. The other end of the variable capacitor 522 is connected to the ground potential. The circuit formed with the variable resistor 521 and the variable capacitor 522 functions as an analog low-pass filter that generates the time average $Vs\_SH_{AVt}$ of the inter-pixel average $Vs\_SH_{AVp}$.

In the potential control unit 530, the time average $Vs\_SH_{AVt}$ is input to an inverting input terminal (-) of the amplifier 531, and a predetermined power supply potential is input to a non-inverting input terminal (+) of the amplifier 531. The amplifier 531 generates a result of comparison between those potentials as VSPAD according to the following expression, and supplies VSPAD to the anodes of the monitor pixels 401 and the measurement pixels 230.

$$VSPAD = Av(VREF - Vs\_SH_{AVt})$$

In the above expression, Av represents the gain of the amplifier 531, and VREF represents the target value of VSPAD.

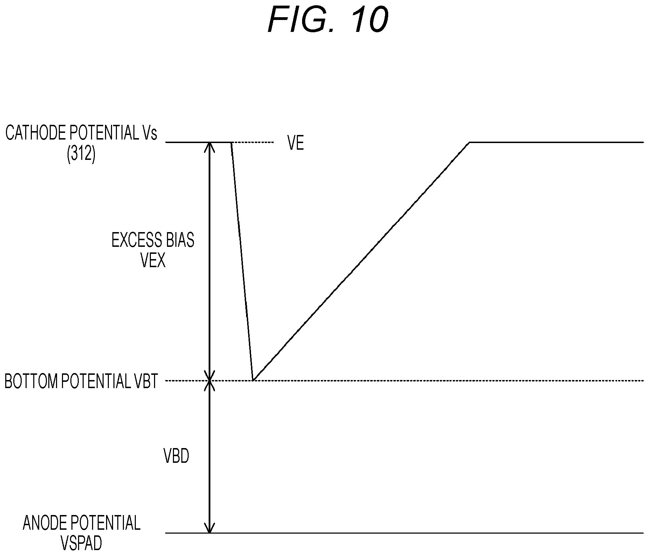

Fig. 10 is a diagram illustrating an example of fluctuations of the cathode potential Vs and the anode potential VSPAD according to the first embodiment of the present technology. The power supply potential VE is supplied by the pMOS transistor 311, and the cathode potential Vs is the power supply potential VE. When photons enters, the cathode potential Vs drops to a bottom potential VBT, and returns to the original power supply potential VE by recharging.

Here, the voltage between the power supply potential VE and the bottom potential VBT is called an excess bias VEX. Further, the voltage between the bottom potential VBT and the anode potential VSPAD is called the breakdown voltage VBD. In a case where the power supply potential VE and the anode potential VSPAD are constant, the excess bias VEX fluctuates depending on variation in the breakdown voltage VBD and the temperature.

As the excess bias VEX decreases, the sensitivity of the photodiode becomes lower in the measurement pixel 230 when photons enter. In this case, a pulse signal of the measurement pixel 230 is not generated even though photons have entered, and photon detection efficiency (PDE) becomes lower. Therefore, the control unit 500 makes the anode potential VSPAD lower, when the holding potential at a time of decrease of the cathode potential Vs is higher. As a result, the breakdown voltage VBD becomes higher, and the excess bias VEX increases, to enhance PDE. Note that details of a potential control method using the monitor pixels 401 are disclosed in Japanese Patent Application Laid-Open No. 2021-56016.

Note that, in the modification of the first embodiment, the monitor pixels 401 are provided in place of the reference pixels 240, but both the reference pixels 240 and the monitor pixels 401 may be disposed on the irradiation side.

As described above, according to the modification of the first embodiment of the present technology, the control circuit 210 makes the anode potential VSPAD lower when the holding potential at a time of decrease of the cathode potential Vs is higher. Thus, PDE can be increased.

<2. Second Embodiment>

In the first embodiment described above, the laser chip 140 and the driver chip 150 are connected to the front surface of the support substrate 130. With this configuration, however, it is difficult to further reduce the thickness and the area of the ranging module 100. Here, the thickness indicates the size in the Z-axis direction. A ranging module 100 according to a second embodiment differs from that of the first embodiment in that the laser chip 140 and the driver chip 150 are connected to the back surface of the support substrate 130.

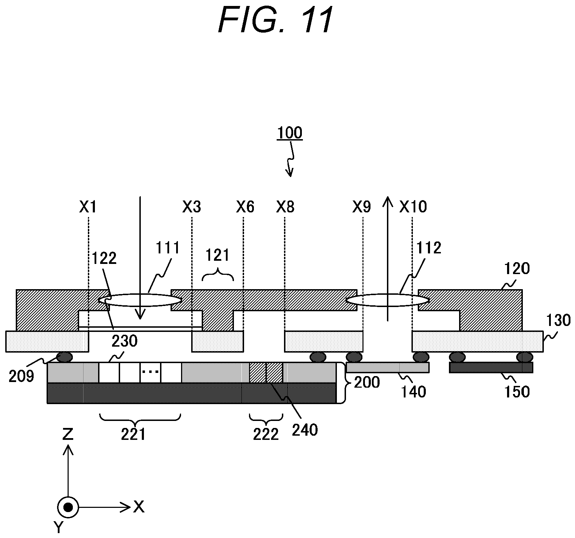

Fig. 11 is an example of a cross-sectional view of the ranging module 100 according to the second embodiment of the present technology. The ranging module 100 according to the second embodiment differs from that of the first embodiment in that the laser chip 140 and the driver chip 150 are flip-chip mounted on the back surface of the support substrate 130.

Also, in the support substrate 130, a third opening for guiding irradiation light is further formed in the range from a coordinate X9 to a coordinate X10 below the lens 112. The laser chip 140 is connected immediately below the opening, with the light emitting surface facing upward. Note that the opening from the coordinate X9 to the coordinate X10 is an example of the third opening of the claims.

As illustrated as an example in the drawing, the opening is added, and the laser chip 140 and the driver chip 150 are connected to the back surface of the support substrate 130, so that the chips and the wires on the front surface side of the support substrate 130 can be reduced. As a result, the thickness of the sealing member 120 can be reduced by the amount equivalent to the eliminated chips and wires, and the thickness of the ranging module 100 can be reduced by corresponding amount. Further, it is no longer necessary to seal the chips in the sealing member 120, and thus, the area of the sealing member 120 can be made smaller than that in the first embodiment.

Furthermore, the laser chip 140 and the driver chip 150 are connected by bumps, so that the wiring length can be made shorter, and parasitic inductance can be made lower than those in the first embodiment in which wire bonding is performed. Thus, the output of the laser diodes 141 can be made greater to enable distance measurement over a longer distance.

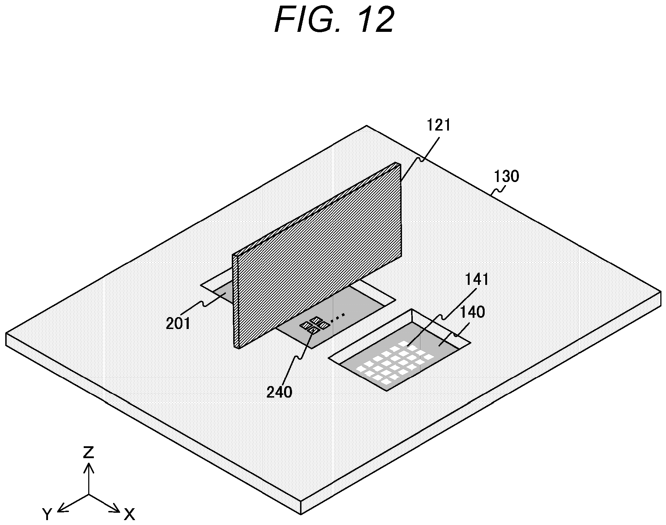

Fig. 12 is an example of a perspective view of the ranging module 100 according to the second embodiment of the present technology. As illustrated as an example in the drawing, an opening is added to the irradiation side, and the opening guides irradiation light from the laser diodes 141.

Note that the modification of the first embodiment can be applied to the second embodiment.

As described above, according to the second embodiment of the present technology, an opening is added to the support substrate 130, and the laser chip 140 and the driver chip 150 are connected to the back surface of the support substrate 130. Thus, the thickness of the ranging module 100 can be reduced, and the area of the ranging module 100 can be made smaller.

## <3. Third Embodiment>

In the first embodiment described above, the laser chip 140 is connected to the front surface of the support substrate 130. With this configuration, however, it is difficult to further reduce the area of the ranging module 100. A ranging module 100 according to a third embodiment differs from that of the first embodiment in that the laser chip 140 is connected to the back surface of the support substrate 130.

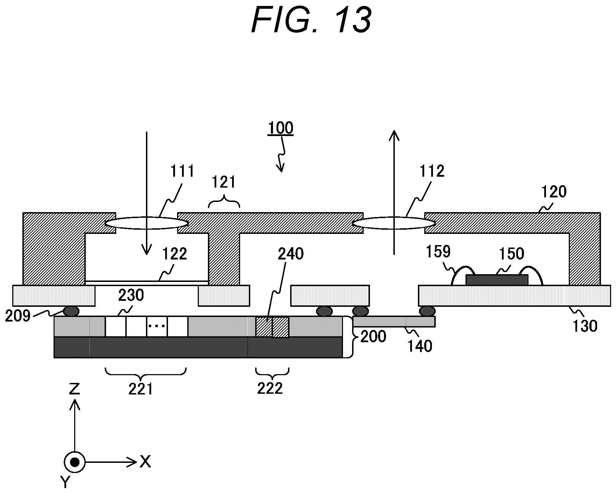

Fig. 13 is an example of a cross-sectional view of the ranging module 100 according to the third embodiment of the present technology. The ranging module 100 according to the third embodiment differs from that of the first embodiment in that the laser chip 140 is flip-chip mounted on the back surface of the support substrate 130.

Also, a third opening for guiding irradiation light is further formed in the support substrate 130. The laser chip 140 is connected immediately below the opening, with the light emitting surface facing upward.

As illustrated as an example in the drawing, the opening is added, and the laser chip 140 is connected to the back surface of the support substrate 130, so that the laser chip 140 and wires 149 on the front surface side of the support substrate 130 can be reduced. Since the space on the front surface necessary for the wires 149 for connecting the laser chip 140 is unnecessary, the area of the ranging module 100 can be reduced by corresponding amount.

Note that the modification of the first embodiment can be applied to the third embodiment.

As described above, according to the third embodiment of the present technology, an opening is added to the support substrate 130, and the laser chip 140 is connected to the back surface of the support substrate 130. Thus, the area of the ranging module 100 can be made smaller.

## <4. Fourth Embodiment>

In the first embodiment described above, the laser chip 140 and the driver chip 150 are wire-bonded to the front surface of the support substrate 130. With this configuration, however, it is difficult to further reduce the area of the ranging module 100. A ranging module 100 according to a fourth embodiment differs from that of the first embodiment in that the laser chip 140 and the driver chip 150 are stacked.

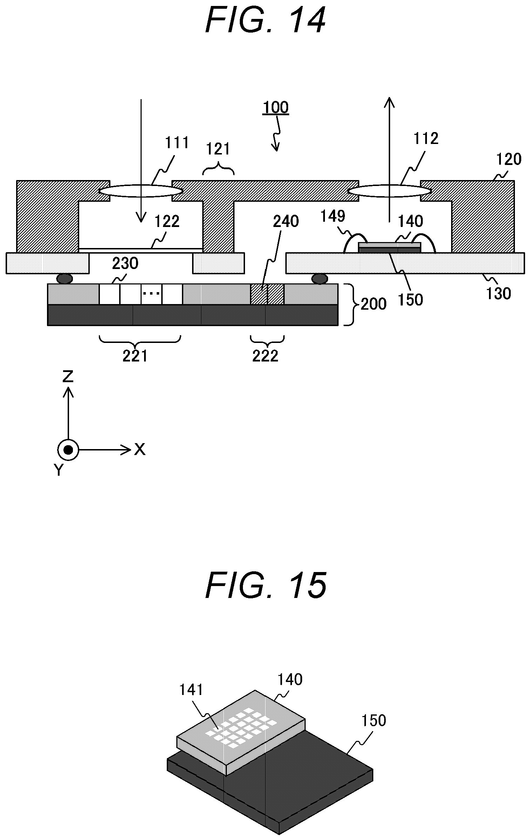

Fig. 14 is an example of a cross-sectional view of the ranging module 100 according to the fourth embodiment of the present technology. The ranging module 100 of the fourth embodiment differs from that of the first embodiment in that the laser chip 140 is stacked on the upper surface of the driver chip 150, with the light emitting surface facing upward. The stacked chip is electrically connected to the front surface of the support substrate 130 by wires 149.

As illustrated as an example in the drawing, the laser chip 140 is stacked on the driver chip 150, so that the area on the support substrate 130 necessary for mounting the chips can be made smaller than that in the first embodiment. Thus, the area of the ranging module 100 can be made smaller than that in the first embodiment.

In Fig. 14, the areas of the driver chip 150 and the laser chip 140 are made substantially the same as each other, but the present embodiment is not limited to this configuration. As illustrated as an example in Fig. 15, the area of the laser chip 140 on the upper side can be made smaller than that of the driver chip 150.

Note that the modification of the first embodiment can be applied to the fourth embodiment.

As described above, according to the fourth embodiment of the present technology, the laser chip 140 is stacked on the driver chip 150, and thus, the area of the ranging module 100 can be made smaller.

## <5. Fifth Embodiment>

In the fourth embodiment described above, wire bonding of a stacked chip formed by stacking the laser chip 140 and the driver chip 150 is performed. With this configuration, however, it is difficult to further reduce the thickness of the ranging module 100. A ranging module 100 according to a fifth embodiment differs from that of the first embodiment in that the stacked chip is connected by solder balls.

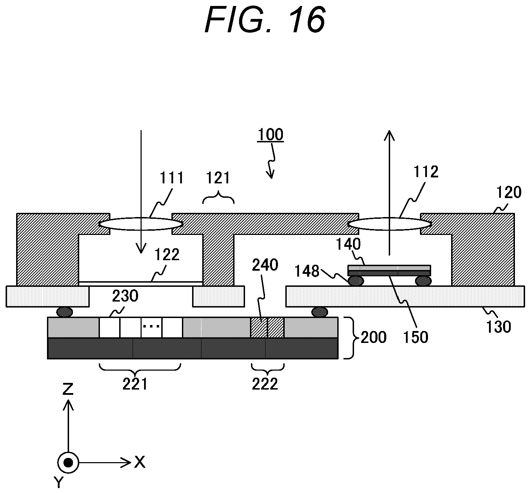

Fig. 16 is an example of a cross-sectional view of the ranging module 100 according to the fifth embodiment of the present technology. The ranging module 100 of the fifth embodiment differs from that of the first embodiment in that stacked chip formed with the laser chip 140 and the driver chip 150 is electrically connected to the support substrate 130 by a plurality of solder balls 148 arranged in an array. Such a chip is called a ball grid array (BGA).

As illustrated as an example in the drawing, a BGA is used as the stacked chip, so that the wires on the front surface side of the support substrate 130 can be reduced. Thus, the thickness of the sealing member 120 can be reduced by the amount equivalent to the eliminated wires, and the thickness of the ranging module 100 can be reduced by corresponding amount.

Note that the modification of the first embodiment can be applied to the fifth embodiment.

As described above, according to the fifth embodiment of the present technology, a BGA is used as the stacked chip formed with the laser chip 140 and the driver chip 150, and thus, the thickness of the ranging module 100 can be reduced.

<6. Sixth Embodiment>

In the first embodiment described above, the laser chip 140 and the driver chip 150 are wire-bonded to the front surface of the support substrate 130. With this configuration, however, it is difficult to further reduce the thickness and the area of the ranging module 100. A ranging module 100 according to a sixth embodiment differs from that of the first embodiment in that the laser chip 140 and the driver chip 150 are stacked, and are then connected to the back surface of the support substrate 130.

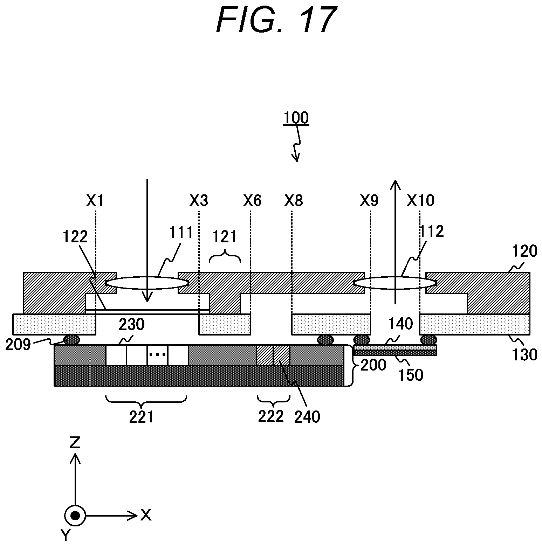

Fig. 17 is an example of a cross-sectional view of the ranging module 100 according to the sixth embodiment of the present technology. The ranging module 100 of the sixth embodiment differs from that of the first embodiment in that the laser chip 140 is stacked on the upper surface of the driver chip 150, with the light emitting surface facing upward. The stacked chip is flip-chip mounted on the back surface of the support substrate 130.

Also, in the support substrate 130, a third opening for guiding irradiation light is further formed in the range from the coordinate X9 to the coordinate X10. The stacked chip is connected immediately below the opening, with the light emitting surface facing upward.

As illustrated as an example in the drawing, the opening is added, and the stacked chip formed with the laser chip 140 and the driver chip 150 is connected to the back surface of the support substrate 130, so that the chips and the wires on the front surface side of the support substrate 130 can be reduced. As a result, the thickness of the sealing member 120 can be reduced by the amount equivalent to the eliminated chips and wires, and the thickness of the ranging module 100 can be reduced by corresponding amount. Further, it is no longer necessary to seal the chips in the sealing member 120, and thus, the area of the sealing member 120 can be made smaller than that in the first embodiment.

Note that the modification of the first embodiment can be applied to the sixth embodiment.

As described above, according to the fifth embodiment of the present technology, an opening is added to the support substrate 130, and a stacked chip is connected to the back surface of the support substrate 130. Thus, the thickness of the ranging module 100 can be reduced, and the area of the ranging module 100 can be made smaller.

<7. Example Application to a Mobile Body>

The technology according to the present disclosure (the present technology) can be applied to various products. For example, the technology according to the present disclosure may be realized as a device mounted on any type of mobile body such as an automobile, an electric vehicle, a hybrid electric vehicle, a motorcycle, a bicycle, a personal mobility, an airplane, a drone, a ship, or a robot.

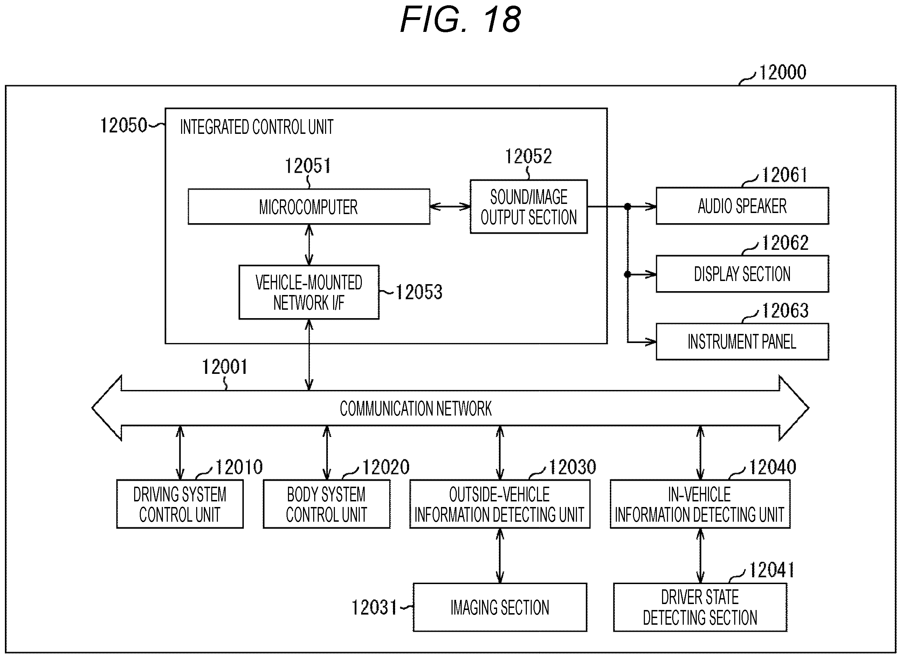

Fig. 18 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig. 18, the vehicle control system 12000 includes a driving system control unit 12010, a body system control unit 12020, an outside-vehicle information detecting unit 12030, an in-vehicle information detecting unit 12040, and an integrated control unit 12050. Further, a microcomputer 12051, a sound/image output section 12052, and a vehicle-mounted network interface (I/F) 12053 are illustrated as functional components of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

Further, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 18, an audio speaker 12061, a display section 12062, and an instrument panel 12063 are illustrated as the output device. The display section 12062 may, for example, include at least one of an on-board display and a head-up display.

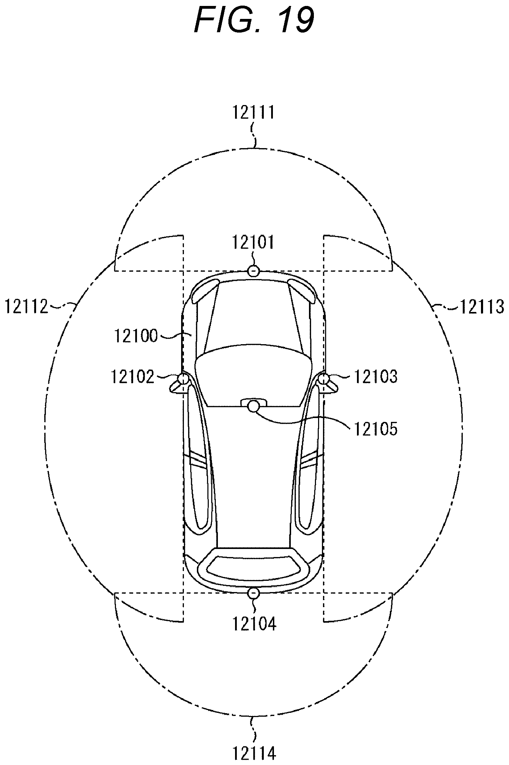

Fig. 19 is a diagram depicting an example of the installation position of the imaging section 12031.

In Fig. 19, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 19 depicts an example of imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of a vehicle control system to which the technology according to the present disclosure can be applied has been described above. The technology according to the present disclosure can be applied to, for example, the outside-vehicle information detecting unit 12030 among the components described above. Specifically, the ranging module 100 in Fig. 1 can be applied to the outside-vehicle information detecting unit 12030. By applying the technology according to the present disclosure to the outside-vehicle information detecting unit 12030, it is possible to reduce leakage of irradiation light, and improve distance measurement performance.

Note that the embodiments described above show examples for embodying the present technology, and the matters in the embodiments and the matters specifying the invention in the claims have correspondence relationships. Similarly, the matters specifying the invention in the claims and matters with the same names in the embodiments of the present technology have correspondence relationships. However, the present technology is not limited to the embodiments, and can be embodied by applying various modifications to the embodiments without departing from the scope of the present technology.

Note that advantageous effects described in the present description are merely examples and are not restrictive, and other advantageous effects may be provided.

Note that the present technology may also have the following configurations.

(1) A ranging module including:

a sensor chip that has a first pixel region and a second pixel region formed on a light receiving surface, a plurality of first pixels being provided in the first pixel region, a second pixel being provided in the second pixel region, the first pixels receiving reflected light of irradiation light from a light source, the second pixel being disposed between the first pixel region and the light source;
a light blocking wall that is disposed between the first pixel region and the second pixel region; and
a support substrate to which the sensor chip is connected, the support substrate having an opening through which the reflected light is guided to the first pixel region and the second pixel region.

(2) The ranging module according to (1), in which

the opening includes a first opening and a second opening separated by a bridge portion that is part of the support substrate,
the first opening guides the reflected light to the first pixel region, and
the second opening guides the reflected light to the second pixel region.

(3) The ranging module according to (2), in which

the light blocking wall is disposed in the bridge portion, and
a width of the light blocking wall is smaller than a distance between the first pixel region and the second pixel region.

(4) The ranging module according to any one of (1) to (3), further including:

a laser chip in which a plurality of laser diodes is provided as the light source; and
a driver chip on which a laser diode driver that drives each laser diode of the plurality of laser diodes is disposed, in which
the sensor chip is connected to a back surface on an opposite side of the support substrate from a front surface that is a surface on a light receiving side of the support substrate.

(5) The ranging module according to (4), in which
the laser chip is disposed between the second pixel and the driver chip.
(6) The ranging module according to (5), in which
the laser chip and the driver chip are connected to the front surface of the support substrate.
(7) The ranging module according to (5), in which

the laser chip and the driver chip are connected to the back surface of the support substrate, and
the opening further includes a third opening that guides the irradiation light from the laser chip.

(8) The ranging module according to (5), in which

the laser chip is connected to the back surface of the support substrate,
the driver chip is connected to the front surface of the support substrate, and
the opening further includes a third opening that guides the irradiation light from the laser chip.

(9) The ranging module according to (4), in which
the laser chip is stacked on the driver chip.
(10) The ranging module according to (9), in which
the laser chip is connected to the front surface of the support substrate by a wire.
(11) The ranging module according to (9), in which
the driver chip is connected to the back surface of the support substrate by a solder ball.
(12) The ranging module according to (9), in which

the laser chip is connected to the back surface of the support substrate, and
the opening further includes a third opening that guides the irradiation light from the laser chip.

(13) The ranging module according to any one of (1) to (12), further including

a ranging processing unit,
in which
the second pixel includes a reference pixel, and
the ranging processing unit obtains a distance in accordance with a time from a timing of light reception by the reference pixel till a timing of light reception by the first pixels.

(14) The ranging module according to any one of (1) to (13), further including

a control circuit,

in which
the first pixels each include a first photodiode,
the second pixel includes a monitor pixel,
the monitor pixel includes a second photodiode and a sample-and-hold circuit, and
the control circuit supplies a lower potential to anodes of the first photodiode and the second photodiode when a holding potential of the sample-and-hold circuit is higher at a time of decrease in a potential of a cathode of the second photodiode due to light reception by the monitor pixel.

REFERENCE SIGNS LIST

100 Ranging module
111, 112 Lens
120 Sealing member
121 Light blocking wall
122 Optical filter
130 Support substrate
139, 149, 159 Wire
140 Laser chip
141 Laser diode
148 Solder ball
150 Driver chip
151 Laser diode driver
200 Sensor chip
201 Pixel chip
202 Circuit chip
205 Solid-state imaging element
209 Bump
211, 212 Photoelectric conversion element
220 Pixel array unit
221 Measurement pixel region
222 Reference pixel region
230 Measurement pixel
240 Reference pixel
250 Signal processing unit
251 TDC
252 Measurement processing unit
311, 381 pMOS transistor
320 Timing detection circuit
330 Sample-and-hold circuit
340, 350 Buffer
382 Inverter
401 Monitor pixel
500 Control unit
510 Inter-pixel average acquisition unit
511 Resistor
512 Capacitor
520 Time average acquisition unit
521 Variable resistor
522 Variable capacitor
530 Potential control unit
531 Amplifier
12030 Outside-vehicle information detecting unit

**Claims**

1. A ranging module comprising:

   a sensor chip that has a first pixel region and a second pixel region formed on a light receiving surface, a plurality of first pixels being provided in the first pixel region, a second pixel being provided in the second pixel region, the first pixels receiving reflected light of irradiation light from a light source, the second pixel being disposed between the first pixel region and the light source;
   a light blocking wall that is disposed between the first pixel region and the second pixel region; and
   a support substrate to which the sensor chip is connected, the support substrate being disposed between the light blocking wall and the sensor chip, the support substrate having an opening through which the reflected light is guided to the first pixel region and the second pixel region.

2. The ranging module according to claim 1, wherein

   the opening includes a first opening and a second opening separated by a bridge portion that is part of the support substrate,
   the first opening is located immediately above the first pixel region, and
   the second opening is located immediately above the second pixel region.

3. The ranging module according to claim 2, wherein

   the light blocking wall is disposed in the bridge portion, and
   a width of the light blocking wall is smaller than a distance between the first pixel region and the second pixel region.

4. The ranging module according to claim 1, further comprising:

   a laser chip in which a plurality of laser diodes is provided as the light source; and
   a driver chip on which a laser diode driver that drives each laser diode of the plurality of laser diodes is disposed, wherein
   the sensor chip is connected to a back surface on an opposite side of the support substrate from a front surface that is a surface on a light receiving side of the support substrate.

5. The ranging module according to claim 4, wherein
   the laser chip is disposed between the second pixel and the driver chip.

6. The ranging module according to claim 5, wherein
   the laser chip and the driver chip are connected to the front surface of the support substrate.

7. The ranging module according to claim 5, wherein

   the laser chip and the driver chip are connected to the back surface of the support substrate, and
   the opening further includes a third opening that guides the irradiation light from the laser chip.

8. The ranging module according to claim 5, wherein

   the laser chip is connected to the back surface of the support substrate,
   the driver chip is connected to the front surface of the support substrate, and
   the opening further includes a third opening that guides the irradiation light from the laser chip.

9. The ranging module according to claim 4, wherein
   the laser chip is stacked on the driver chip.

10. The ranging module according to claim 9, wherein
    the laser chip is connected to the front surface of the support substrate by a wire.

11. The ranging module according to claim 9, wherein

the driver chip is connected to the back surface of the support substrate by a solder ball.

12. The ranging module according to claim 9, wherein

the laser chip is connected to the back surface of the support substrate, and
the opening further includes a third opening that guides the irradiation light from the laser chip.

13. The ranging module according to claim 1, further comprising

a ranging processing unit,
wherein
the second pixel includes a reference pixel, and
the ranging processing unit obtains a distance in accordance with a time from a timing of light reception by the reference pixel till a timing of light reception by the first pixels.

14. The ranging module according to claim 1, further comprising

a control circuit,
wherein
the first pixels each include a first photodiode,
the second pixel includes a monitor pixel,
the monitor pixel includes a second photodiode and a sample-and-hold circuit, and
the control circuit supplies a lower potential to anodes of the first photodiode and the second photodiode when a holding potential of the sample-and-hold circuit is higher at a time of decrease in a potential of a cathode of the second photodiode due to light reception by the monitor pixel.

# *FIG. 1*

<u>a</u>

<u>b</u>

# *FIG. 2*

a

b

# FIG. 3

**a**

**b**

# FIG. 4

100

RANGING MODULE

140

LASER CHIP 141

| LD | LD | ··· |
| LD | LD | |

150

DRIVER CHIP 151

LASER DIODE DRIVER

200

SENSOR CHIP 205

SOLID-STATE IMAGING ELEMENT

DISTANCE DATA

# FIG. 5

# FIG. 6

# FIG. 7

a

b

c

# FIG. 8

# FIG. 9

# FIG. 10

# FIG. 11

# FIG. 12

# FIG. 13

# FIG. 14

# FIG. 15

# FIG. 16

# FIG. 17

# FIG. 18

Block diagram showing vehicle control system (12000):

- INTEGRATED CONTROL UNIT (12050)
  - MICROCOMPUTER (12051)
  - SOUND/IMAGE OUTPUT SECTION (12052)
  - VEHICLE-MOUNTED NETWORK I/F (12053)
- AUDIO SPEAKER (12061)
- DISPLAY SECTION (12062)
- INSTRUMENT PANEL (12063)
- COMMUNICATION NETWORK (12001)
- DRIVING SYSTEM CONTROL UNIT (12010)
- BODY SYSTEM CONTROL UNIT (12020)
- OUTSIDE-VEHICLE INFORMATION DETECTING UNIT (12030)
  - IMAGING SECTION (12031)
- IN-VEHICLE INFORMATION DETECTING UNIT (12040)
  - DRIVER STATE DETECTING SECTION (12041)

EP 4 546 003 A1

## FIG. 19

## INTERNATIONAL SEARCH REPORT

| International application No. |
|---|
| **PCT/JP2023/016607** |

**A. CLASSIFICATION OF SUBJECT MATTER**

*G01S 7/481*(2006.01)i; *H01L 27/146*(2006.01)i
FI: G01S7/481 Z; H01L27/146 D

According to International Patent Classification (IPC) or to both national classification and IPC

**B. FIELDS SEARCHED**

Minimum documentation searched (classification system followed by classification symbols)

G01S 7/48 - G01S 7/51, G01S 17/00 - G01S 17/95, H01S 5/00 - H01S 5/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/209206 A1 (SHARP KABUSHIKI KAISHA) 07 December 2017 (2017-12-07) paragraphs [0017]-[0039], fig. 1, 2, 8 | 1-14 |
| Y | WO 2022/124059 A1 (SONY SEMICONDUCTOR SOLUTIONS CORP.) 16 June 2022 (2022-06-16) paragraphs [0029], [0065]-[0073], [0162]-[0164], fig. 7, 8, 17 | 1-14 |
| Y | US 2020/0185875 A1 (FINISAR CORP.) 11 June 2020 (2020-06-11) paragraphs [0006], [0043]-[0048], fig. 3, 4 | 7-12 |
| Y | JP 2021-056016 A (SONY SEMICONDUCTOR SOLUTIONS CORP.) 08 April 2021 (2021-04-08) paragraphs [0075]-[0091] | 14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/016607**

| Patent document cited in search report | | | Publication date (day/month/year) | Patent family member(s) | | | Publication date (day/month/year) |
|---|---|---|---|---|---|---|---|
| WO | 2017/209206 | A1 | 07 December 2017 | US | 2019/0259902 | A1 | |
| | | | | paragraphs [0025]-[0047], fig. 1, 2, 8 | | | |
| | | | | JP | 6633197 | B2 | |
| | | | | CN | 109196662 | A | |
| WO | 2022/124059 | A1 | 16 June 2022 | (Family: none) | | | |
| US | 2020/0185875 | A1 | 11 June 2020 | WO | 2020/118279 | A1 | |
| JP | 2021-056016 | A | 08 April 2021 | US | 2022/0344521 | A1 | |
| | | | | paragraphs [0119]-[0137] | | | |
| | | | | WO | 2021/059619 | A1 | |
| | | | | CN | 114467037 | A | |
| | | | | KR | 10-2022-0069001 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016027657 A
- JP 2020139810 A
- JP 2021056016 A